# EUROPÄISCHE PATENTSCHRIFT

(11) **EP 4 115 578 B1**
(45) Veröffentlichungstag und Bekanntmachung des Hinweises auf die Patenterteilung: **30.10.2024**
(21) Anmeldenummer: 21708241.1
(22) Anmeldetag: 03.03.2021
(51) Int. Cl.: H04L 9/40

(54) **VORRICHTUNG MIT EINER ZWISCHEN WENIGSTENS ZWEI NETZEN GESCHALTETEN NETZWERKKOMPONENTE MIT AUFZEICHNUNGSFUNKTIONALITÄT ZUM AUFZEICHNEN VON BEIM PASSIEREN VON DATENVERKEHR VORLIEGENDEN KOMMUNIKATIONSBEZIEHUNGEN SOWIE VERFAHREN ZUM BETREIBEN EINER NETZWERKKOMPONENTE**
APPARATUS HAVING A NETWORK COMPONENT, CONNECTED BETWEEN AT LEAST TWO NETWORKS, WITH RECORDING FUNCTIONALITY FOR RECORDING COMMUNICATION RELATIONSHIPS PRESENT DURING THE PASSAGE OF DATA TRAFFIC, AND METHOD FOR OPERATING A NETWORK COMPONENT
APPAREIL DOTÉ D'UN COMPOSANT DE RÉSEAU, CONNECTÉ ENTRE AU MOINS DEUX RÉSEAUX, AVEC FONCTIONNALITÉ D'ENREGISTREMENT POUR ENREGISTRER DES RELATIONS DE COMMUNICATION PRÉSENTES PENDANT LE PASSAGE D'UN TRAFIC DE DONNÉES, ET PROCÉDÉ D'EXPLOITATION D'UN COMPOSANT DE RÉSEAU

(30) Priorität: 06.03.2020 BE 202005153
(43) Veröffentlichungstag der Anmeldung: 11.01.2023
(73) Patentinhaber: PHOENIX CONTACT GMBH & CO. KG, 32825 Blomberg (DE)
(72) Erfinder: HILGENKAMP, Ingo, 33397 Rietberg (DE); FUSS, Andreas, 10405 Berlin (DE); BOYSEN, Gerrit, 32760 Detmold (DE)
(74) Vertreter: Blumbach · Zinngrebe Patentanwälte PartG mbB
(86) Internationale Anmeldenummer: PCT/EP2021/055296
(87) Internationale Veröffentlichungsnummer: WO 2021/175906

(56) Entgegenhaltungen:
- US-A1- 2015 372 980
- US-A1- 2018 359 639

## Beschreibung

Die Erfindung betrifft eine Vorrichtung mit einer zwischen wenigstens zwei Netzen geschalteten Netzwerkkomponente mit Aufzeichnungsfunktionalität zum Aufzeichnen von beim Passieren von Datenverkehr vorliegenden Kommunikationsbeziehungen, sowie ein Verfahren zum Betreiben einer Netzwerkkomponente,

Um ein Kommunizieren und/oder einen Austausch von Daten über die Grenzen eines Netzes hinweg zu ermöglichen und/oder beispielsweise ein Netz mit dem Internet oder einem anderen Netzwerk zu verbinden, werden an den Außengrenzen eines Netzwerkes bzw. zwischen wenigstens zwei Kommunikations-, Anlagen- und/oder Rechnernetzen, bekanntermaßen häufig Netzwerkkomponenten eingesetzt, welche ermöglichen, mehrere Netzwerke auch mit unterschiedlichen Protokollen bzw. Medien miteinander zu verbinden. Im Rahmen der Erfindung betrifft der Begriff Netz oder Netzwerk somit grundsätzlich auch Teilbereiche eines solchen, bis hin zu einzelnen Netzzellen, an deren Außengrenzen dann jeweils eine solche Netzwerkkomponente eingesetzt ist. Hierbei wird häufig auch der eingehende und/oder ausgehende Netzwerkverkehr überwacht und auf Grundlage einer Reihe von definierten Sicherheitsregeln entschieden, ob bestimmter Datenverkehr zugelassen oder blockiert wird. In der Praxis besitzen solche Netzwerkkomponenten zur Überwachung des der eingehenden und/oder ausgehenden Netzwerkverkehr herkömmlicher Weise die Funktionalität einer sogenannten Firewall. insbesondere aus dem Bereich des IT-Security-Umfeldes und des OT-Umfeldes, d.h. dem Bereich der Operativen Technologien (im engl. "Operational Technology") sind vielfältige Ausführungen auch industrieller Firewalls bekannt.

Die korrekte Konfiguration einer Firewall stellt Mitarbeiter aus dem OT-Umfeld, insbesondere, wenn diese kein fundiertes IT-Knowhow besitzen, jedoch oft vor große Herausforderungen. In der DE 10 2010 045 256 A1 ist diesbezüglich z.B. ein Verfahren zum Betreiben eines Firewallgerätes in Automatisierungsnetzwerken beschrieben, um die Konfiguration einer industriellen Firewall zu vereinfachen. Im Einzelnen ist dort ein Verfahren zum Betreiben eines Firewallgerätes in Automatisierungsnetzwerken beschrieben, wobei das Firewallgerät zwischen zumindest zwei ein oder mehreren Infrastrukturgeräte aufweisende Netzwerken angeordnet und dazu geeignet und ausgebildet ist, Datenverkehr in Abhängigkeit von Regeln zwischen den Netzwerken passieren zu lassen oder die Übertragung zwischen den Netzwerken zu blockieren, und während einer Lernphase aus dem Datenverkehr Daten zu erfassen und Regeln abzuleiten, ohne physikalisch in den Datenverkehr einzugreifen. Die Erfassung, Haltung (Speicherung) und Voroptimierung der Daten wird hierbei in einem in dem Firewallgerät eingebetteten Prozess durchgeführt, wobei das Firewallgerät durch Mithören und Analysieren des Netzwerkverkehrs zunächst geeignete Firewall-Regeln ableitet und optimiert und erst anschließend dem Benutzer die Möglichkeit gibt, die vorgeschlagenen Regeln zu bearbeiten, zu verwerfen oder anzunehmen.

Einerseits ist bei dem in der DE 10 2010 045 256 A1 beschrieben Vorgang folglich von Vorteil, dass bei der Datenerfassung keine geöffnete Verbindung zum Management oder zu einer externen Anwendung notwendig ist, da die Datenerfassung nicht auf den Interfaces der einzelnen Infrastrukturgeräte direkt aufsetzt, sondern sich in die interne Firewall einklinkt. Die Sicherheitsfunktion des Firewallgerätes bleibt somit während des Lernens erhalten, zumindest kann eine Default-Paketfilterung aktiv bleiben. Andererseits bedarf es eines komplexen Lernalgorithmus, da zunächst jede Kommunikationsbeziehung eine vorläufige Firewall-Regel ergibt und ein anschließend erstelltes Set von Regeln wieder über eine Optimierung der Regeln reduziert werden muss.

Die US 2018/359639 A1 beschreibt ein Netzwerksicherheitssystem und - verfahren, das einem mobilen Client den sicheren Fernzugriff auf die sicheren Netzwerk-Ports eines Zielservers ermöglicht, indem der mobile Client eine Sequenz von mindestens zwei Netzwerk-Ports in der richtigen Reihenfolge und innerhalb einer vorbestimmten Zeitspanne anfragt. Wenn die richtige Sequenz rechtzeitig empfangen wird, kann das System angewiesen werden, neue Netzwerk-Firewall-Regeln zu schreiben. Ein Monitor-Dienst überwacht und bestätigt die korrekten Netzwerk-Port-Sequenzen, erfasst die IP-Adresse des mobilen Clients und speichert die Netzwerkinformationen des Clients. Ein Regelgenerator verwendet dann die Daten des Monitor-Dienstes, um dynamisch Netzwerk-Firewall-Regeln zu generieren und zu schreiben, die es dem mobilen Client erlauben, für eine bestimmte Zeitspanne von seiner aktuellen Quell-IP-Adresse aus weiterhin auf den Ziel-Netzwerk-Port für eine begrenzte Zeit zuzugreifen.

Aufgabe der Erfindung ist es, eine wesentlich einfachere Möglichkeit zu schaffen, mit welcher die Regeln einer Netzwerkkomponente in Bezug auf einen zu passierenden und/oder zu blockierenden Datenverkehr an aktuelle oder sich verändernde Umstände, insbesondere sich ändernde Kommunikationsbeziehungen anpassbar sind, und die hierfür notwendige Datenerfassung zur Regelanpassung auf einfachste bedienbar ist, insbesondere auch Mitarbeitern ohne IT-Kenntnisse und insbesondere ohne spezielle Zugriffsrechte.

Die Lösung gemäß Erfindung ist durch eine Vorrichtung bzw. durch ein Verfahren mit den jeweiligen Merkmalen gemäß den angehängten unabhängigen Ansprüchen gegeben. Bevorzugte Weiterbildungen sind Gegenstand der jeweiligen abhängigen Ansprüche.

Demgemäß wird eine Vorrichtung vorgeschlagen, welche eine Netzwerkkomponente umfasst, die zwischen wenigstens zwei Kommunikations-, Anlagen- und/oder Rechnernetzen geschaltet sowie geeignet und ausgebildet ist, Datenverkehr in Abhängigkeit von anpassbaren und entsprechend aktivierten Datenverkehr-Regeln zwischen den Netzen passieren zu lassen oder ein Passieren von Datenverkehr durch die Netzwerkkomponente zu blockieren. Die Netzwerkkomponente besitzt hierbei eine Aufzeichnungsfunktionalität zum Aufzeichnen der beim Passieren des Datenverkehrs vorliegenden Kommunikationsbeziehungen, wobei ferner eine mit der Aufzeichnungsfunktionalität zusammenwirkende Aktivierungs-/Deaktivierungseinrichtung umfasst ist, zum temporären Aktivieren und/oder Deaktivieren der Aufzeichnungsfunktionalität, und die Netzwerkkomponente eingerichtet ist, nur bei deaktivierter Aufzeichnungsfunktionalität die aufgezeichneten Kommunikationsbeziehungen zur Anpassung und nachfolgender Aktivierung der Datenverkehr-Regeln freizugeben.

Ein wesentlicher Vorteil hierbei ist folglich, dass die gemäß vorstehender Definition insbesondere auch zwischen Teilbereichen eines Netzes und/oder einzelnen Netzzellen einsetzbare Netzwerkkomponente lediglich Aufzeichnungsfunktionalität zum Aufzeichnen der beim Passieren des Datenverkehrs vorliegenden Kommunikationsbeziehungen besitzt, die mittels einer Aktivierungs-/Deaktivierungseinrichtung temporär aktivierbar und/oder deaktivierbar ist. Da eine Anpassung und nachfolgende Aktivierung der Datenverkehr-Regeln basierend auf den aufgezeichneten Kommunikationsbeziehungen erst bei deaktivierter Aufzeichnungsfunktionalität erfolgen kann und folglich keine Lernphase mitumfasst ist, während der auch bereits Regeln abgeleitet werden, bedarf es folglich auch keines komplexes Lernalgorithmus. Vielmehr kann zum einen die Aktivierungs-/Deaktivierungseinrichtung äußerst einfach aufgebaut sein und die Aktivierung bzw. Deaktivierung kann je nach Bedarf und in sehr individueller Weise erfolgen, ohne, dass hierfür IT-Kenntnisse notwendig sein müssen. Andererseits kann dann die hiervon getrennte, separat durchzuführende Anpassung und nachfolgende Aktivierung der Datenverkehr-basierend auf den aufgezeichneten Kommunikationsbeziehungen, nach deren Freigabe, gleichermaßen in sehr individueller und flexibler Weise erfolgen, insbesondere auch ortsungebunden, d.h. beispielsweise auch aus der Ferne. Da zusammen mit der Aufzeichnung folglich auch kein Eingriff in die Datenverkehr-Regeln gegeben ist, welches Auswirkungen auf die Sicherheit haben könnte, kann die Aktivierung einer solchen Aufzeichnung insbesondere auch ohne spezielle Zugriffs rechte erfolgen.

Bei der erfindungsgemäßen Vorrichtung aber auch dem sich dementsprechend mit ähnlichen Vorteilen auszeichnenden Verfahren zum Betreiben einer Netzwerkkomponente, die zwischen wenigstens zwei Kommunikations-, Anlagen- und/oder Rechnernetzen geschaltet sowie geeignet und ausgebildet ist, Datenverkehr in Abhängigkeit von anpassbaren und entsprechend aktivierten Datenverkehr-Regeln zwischen den Netzen passieren zu lassen oder ein Passieren von Datenverkehr durch die Netzwerkkomponente zu blockieren, bei welchem die Netzwerkkomponente eine Kommunikationsbeziehung-Aufzeichnungsfunktionalität zum Aufzeichnen der beim Passieren des Datenverkehrs vorliegenden Kommunikationsbeziehungen besitzt, wobei die Aufzeichnungsfunktionalität zum Aufzeichnen von Kommunikationsbeziehungen temporär aktiviert und/oder deaktiviert werden kann und nur bei deaktivierter Kommunikationsbeziehung-Aufzeichnungsfunktionalität die Bearbeitung der aufgezeichneten Kommunikationsbeziehungen zur Anpassung und nachfolgender Aktivierung der Datenverkehr-Regeln freigegeben wird, sind folglich in zweckmäßiger Weise Ausführungen vorgesehen, mit welchen die Kommunikationsbeziehung-Aufzeichnungsfunktionalität mittels einer START/STOP - Schaltfläche, insbesondere in einem Web-Based-Management der Netzwerkkomponente, durch Aufschalten eines Signals auf einen vorbestimmten digitalen Signaleingangsanschluss der Netzwerkkomponente, und/oder mittels eines externen, insbesondere zentralen Management-Tools aktiviert und/oder deaktiviert werden kann.

Insbesondere, um die Komplexität in Bezug auf die Datenaufzeichnung so gering wie möglich zu halten, ist ferner zweckmäßig vorgesehen, bei aktivierter Kommunikationsbeziehung-Aufzeichnungsfunktionalität bereits aufgezeichnete Kommunikationsbeziehungen bei wiederholtem Auftreten nicht ein weiteres Mal aufzuzeichnen.

In besonders bevorzugter Ausführung ist ferner vorgesehen, dass bei der erfindungsgemäßen Vorrichtung bzw. der erfindungsgemäßen Netzwerkkomponente mit der Aktivierung der Aufzeichnungsfunktionalität eine Zeitschaltfunktion aktiviert werden kann, insbesondere, um die Aufzeichnung an ein vorgebbares Zeitfenster zu koppeln. Auch kann zweckmäßig vorgesehen sein, dass eine solche aktivierte Zeitschaltfunktion auch zum selektiven Deaktivieren der Aufzeichnungsfunktionalität eingesetzt werden kann, insbesondere, um im Bedarfsfall eine aktivierte Aufzeichnungsfunktionalität auch hierüber wieder zu deaktivieren, In besonders bevorzugter, ergänzender oder alternativer Ausführung ist ferner vorgesehen, dass der Zustand einer aktivierten Aufzeichnungsfunktionalität mittels einer optischen und/oder akustischen Anzeige angezeigt wird und/oder der Zugriff auf die jeweils aktuell aktivierten Datenverkehr-Regeln temporär freigegeben und/oder gesperrt werden kann.

Weitere Vorteile und Merkmale der Erfindung ergeben sich aus der nachfolgenden Beschreibung einiger bevorzugter Ausführungsbeispiele anhand der beigefügten Zeichnungen, in denen zeigen:
- Fig. 1: in stark schematisierter Darstellung eine Netzwerkkomponente gemäß der Erfindung mit verschiedenen Ausführungsbeispielen zum Aktivieren der Kommunikationsbeziehung-Aufzeichnungsfunktionalität,
- Fig. 2: stark schematisiert das Aufzeichnen der beim Passieren des Datenverkehrs vorliegenden Kommunikationsbeziehungen;
- Fig. 3: in stark schematisierter Darstellung eine Netzwerkkomponente gemäß der Erfindung mit verschiedenen Ausführungsbeispielen zum Anpassen und nachfolgenden Aktivieren der Datenverkehr-Regeln;
- Fig. 4: stark schematisiert das Änderungsmöglichkeiten zur Aktualisierung von Datenverkehr-Regeln; und
- Fig. 5a, 5b: in stark schematisierter Darstellung Teilansichten von Netzwerkkomponenten gemäß der Erfindung mit verschiedenen Ausführungsformen einer erfindungsgemäßen Aktivierungs- /Deaktivierungseinrichtung;

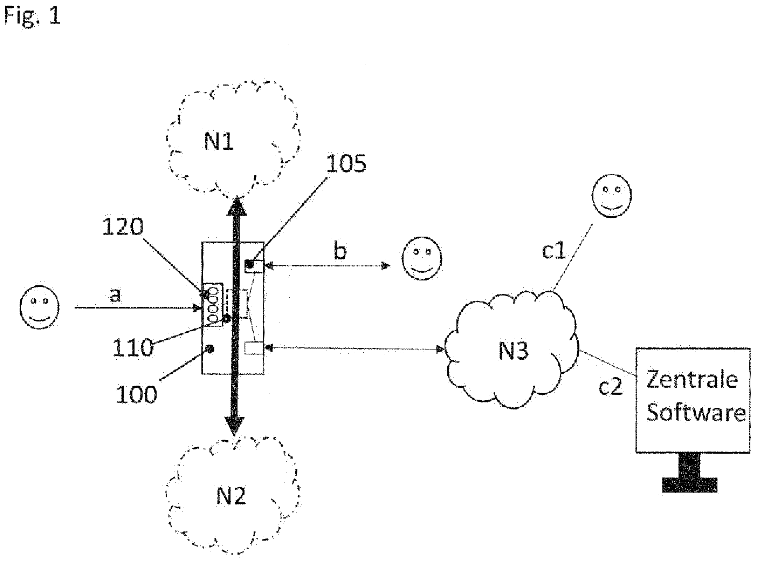

Die Figur 1 zeigt in stark schematisierter Darstellung eine Netzwerkkomponente 100 gemäß der Erfindung mit verschiedenen Ausführungsbeispielen zum Aktivieren der Kommunikationsbeziehung-Aufzeichnungsfunktionalität, wobei die Aktivierungs-/Deaktivierungseinrichtung jeweils in Hardware und in Software ausgestaltet sein können, wie nachfolgend noch näher beschrieben.

Auch wenn eine weitergehende, die Netzwerkkomponenten enthaltene Vorrichtung aus Gründen der Übersichtlichkeit nicht gezeigt ist, ist bei Fig. 1 skizziert, dass die Netzwerkkomponente 100 zwischen zwei Netzen N1 und N2 geschaltet ist. Mit dem zwischen den Netzen N1 und N2 angeordneten und durch die Netzwerkkomponente 100 geführten Doppelpfeil ist angezeigt, dass diese geeignet und ausgebildet ist Datenverkehr in Abhängigkeit von Datenverkehr-Regeln zwischen den Netzen N1 und N2 passieren zu lassen oder auch ein Passieren von Datenverkehr durch die Netzwerkkomponente zu blockieren. Die Netzwerkkomponente 100 ist folglich in praktischer Ausführung zweckmäßig mit einer Router- und/oder Firewallfunktion eingerichtet oder insgesamt als Router- und/oder Firewallgerät ausgebildet, wobei die in der Netzwerkkomponente 100 hinterlegten Datenverkehr-Regeln anpassbar und entsprechend aktivierbar sind. Mit anderen Worten ist die Netzwerkkomponente 100 ferner eingerichtet, dass die Datenverkehr-Regeln auch deaktiviert bzw. nicht aktiviert sind. Zweckmäßig ist die Netzwerkkomponente 100 für diesen Fall eingerichtet, dass kein Datenverkehr zwischen Netzen blockiert wird.

Die in Fig. 1 gestrichelt skizzierten Netze N1 und N2 bilden jeweils ein Kommunikations-, Anlagen- und/oder Rechnernetz, wobei ein solches insbesondere jeweils auch bereits durch einen Teilbereich eines größeren Netzes gebildet sein kann, bis hin zu einzelnen Netzzellen, an deren Außengrenzen dann jeweils eine solche Netzwerkkomponente eingesetzt ist. Beispielsweise trennt die Netzwerkkomponente 100 jeweils eine bestimmte Netzzelle N1 von einem anderen Netzbereich N2 ab, wobei die Netzzelle N1 z.B. einer bestimmten Produktionszelle eines Anlagennetzwerkes entsprechen kann, an deren Außengrenze die Netzwerkkomponente 100 eingesetzt ist, um einen Zugriff von außerhalb der Netzzelle N1, also insbesondere vom Netz oder Netzbereich N2 kommend, kontrollieren zu können.

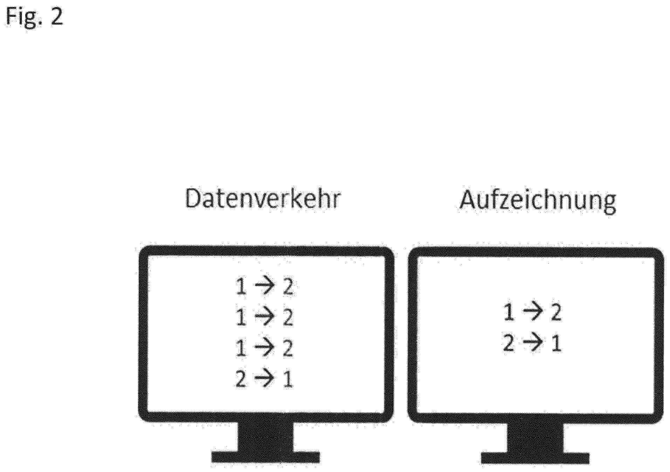

Bei der Netzwerkkomponente 100 ist ferner eine Komponente 110 gestrichelt dargestellt, insbesondere eine in die Netzwerkkomponente 100 integrierte Komponente 110, welche eine Aufzeichnungsfunktionalität zum Aufzeichnen der beim Passieren des Datenverkehrs vorliegenden Kommunikationsbeziehungen zur Verfügung stellt. Die Aufzeichnungsfunktionalität der Komponente 110 kann hierbei aktiviert und auch deaktiviert werden. Insbesondere kann vorgesehen sein, dass Aufzeichnungsfunktionalität in einem Grundzustand der Komponente 110 deaktiviert ist und temporär aktivierbar ist. Hierbei kann ferner gemäß einer Ausführung vorgesehen sein, dass nach Aktivierung der Aufzeichnungsfunktionalität diese wieder deaktiviert werden muss. Alternativ oder ergänzend kann jedoch auch bevorzugt vorgesehen sein, dass die Aufzeichnungsfunktionalität mit einer Zeitschaltfunktion gekoppelt ist. Vorgesehen ist, dass die Netzwerkkomponente 100 eingerichtet ist, dass lediglich bei deaktivierter Aufzeichnungsfunktionalität die aufgezeichneten Kommunikationsbeziehungen zur Anpassung und nachfolgenden Aktivierung der Datenverkehr-Regeln freigegeben werden. Was das Aufzeichnen der Kommunikationsbeziehungen betrifft, so ist die Aufzeichnungsfunktionalität zweckmäßig derart eingerichtet, dass das Aufzeichnen der beim Passieren des Datenverkehrs vorliegenden Kommunikationsbeziehungen nicht das Aufzeichnen doppelter Einträge umfasst, wie in stark schematisierter Weise bei Fig. 2 dargestellt. Mit anderen Worten ist zweckmäßig vorgesehen, dass bei aktivierter Kommunikationsbeziehung-Aufzeichnungsfunktionalität bereits aufgezeichnete Kommunikationsbeziehungen bei wiederholtem Auftreten nicht ein weiteres Mal aufgezeichnet werden.

Da ferner die aufgezeichneten Kommunikationsbeziehungen bei deaktivierter Aufzeichnungsfunktionalität erst freigegeben werden, findet folglich weder bei der Netzwerkkomponente gemäß der Erfindung noch beim Betreiben einer solchen ein automatischer Algorithmus Anwendung, der der Kommunikationsregeln zusammenfasst und optimiert. Im Gegensatz, gemäß Gegenstand der Erfindung existiert nach Aufzeichnung dann zweckmäßig je aufgezeichneter Kommunikationsbeziehung existiert folglich eine Regel, d.h. insbesondere welches Infrastruktur- bzw. Netzgerät 1 aus dem einen Netz kommuniziert in welche Richtung mit welchem Infrastruktur- bzw. Netzgerät 2 aus einem anderen Netz. Das verbessert unter anderem die Transparenz, die Reproduzierbarkeit und die Verständlichkeit von Ergebnissen und somit auch am Ende die gesamte Sicherheit.

Zum temporären Aktivieren und/oder Deaktivieren der Aufzeichnungsfunktionalität ist daher mit der Vorrichtung gemäß Erfindung eine mit der Aufzeichnungsfunktionalität zusammenwirkende Aktivierungs-/Deaktivierungseinrichtung umfasst, die grundsätzlich unterschiedlich ausgebildet sein kann.

In zweckmäßiger Ausführung ist hierbei vorgesehen, dass für die Aktivierungs-/Deaktivierungseinrichtung beispielweise eine START/STOP-Schaltfläche 105, insbesondere in einem Web-Based-Management der Netzwerkkomponente 100 umfasst ist, über deren Betätigung die Aufzeichnungsfunktionalität aktiviert und/oder deaktiviert werden kann, wie bei Fig. 1 mit dem mit b gekennzeichneten Pfeil angedeutet. Ist eine solche Schaltfläche in einem Web-Based-Management der Netzwerkkomponente 100 angeordnet, kann z.B. auch über einen WEB-Browser, auch über ein weiteres Netzwerk hinweg, z.B. das bei Fig. 1 mit N3 gekennzeichnete Netzwerk, direkt mit der Netzwerkkomponente 100 kommuniziert werden, um die Aufzeichnungsfunktionalität zu aktivieren und/oder deaktivieren, wie bei Fig. 1 mit dem mit c1 gekennzeichneten Pfeil angedeutet.

In weiterer ergänzender oder alternativer Ausführung ist ferner vorgesehen, dass für die Aktivierungs-/Deaktivierungseinrichtung beispielweise ein externes, insbesondere zentrales Management-Tool umfasst ist, wie z.B. das bei Fig. 1 mit "zentraler Software" bezeichnete Management-Tool, über welches, bei Fig. 1 mit dem mit c2 gekennzeichneten Pfeil angedeutet, mit der Netzwerkkomponente 100 kommuniziert werden, um die Aufzeichnungsfunktionalität zu aktivieren und/oder deaktivieren, In weiterer ergänzender oder alternativer Ausführung ist ferner vorgesehen, dass für die Aktivierungs-/Deaktivierungseinrichtung beispielweise ein vorbestimmter digitaler Signaleingangsanschluss der Netzwerkkomponente 100 zum Aufschalten eines Signals nutzbar ist, um die Aufzeichnungsfunktionalität zu aktivieren und/oder deaktivieren, bei Fig. 1 mit dem mit a gekennzeichneten Pfeil angedeutet.

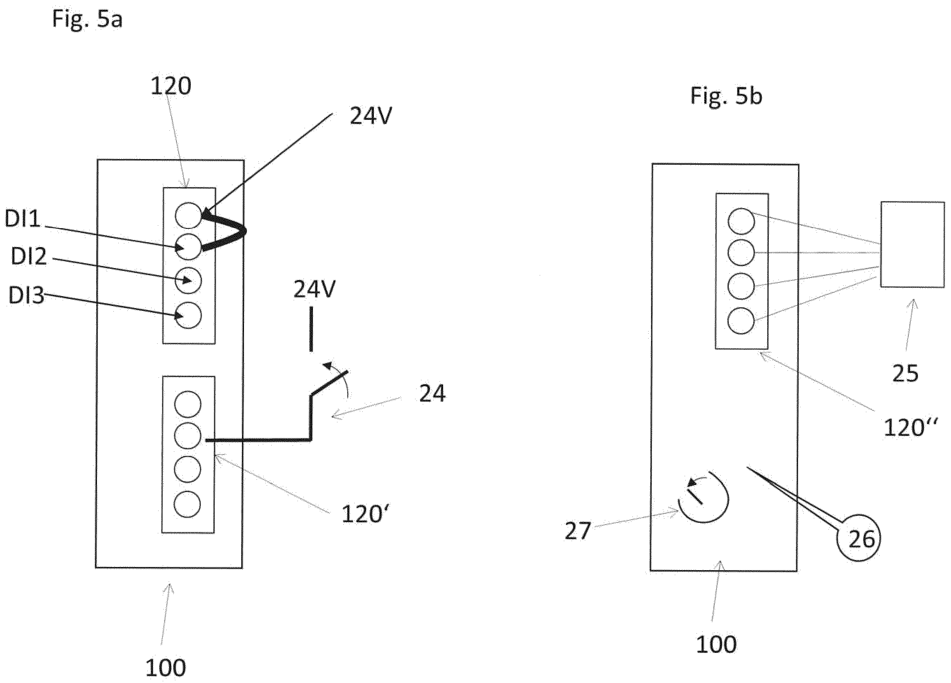

Die Netzwerkkomponente 100 besitzt hierbei, wie es häufig üblich ist, z.B. wenigstens einen Signalanschlussblock 120, der eine Anzahl, insbesondere eine Mehrzahl von Signaleingangsanschlüssen, und in der Regel auch eine Anzahl, insbesondere eine Mehrzahl von Ausgangsanschlüssen umfasst. Derartige Ein- und Ausgangsanschlüsse stellen in der Regel digitale Signalanschlüsse bereit und sind dem Fachmann an und für sich bekannt. Bei Fig. 5a ist eine Netzwerkkomponente 100 exemplarisch mit zwei solchen Signalanschlussblöcken 120 und 120' skizzenhaft dargestellt.

Über den Signalanschlussblock 120' kann z.B. mit Hilfe eines Schalters oder Tasters 24 ein vorbestimmter Anschluss, insbesondere mit einem digitalen Eingang, zur temporären Aktivierung der Aufzeichnungsfunktionalität zunächst an ein hierzu notwendiges Spannungspotential, z.B.24V, gelegt sein. Zum Deaktivieren der Aufzeichnungsfunktionalität kann mittels des Schalters oder Tasters 24 die Verbindung mit zu dem notwendigen Spannungspotential unterbrochen werden. Anstelle eines Schalters oder Tasters 24 kann jedoch auch z.B. eine Steuerkomponente 25 (vgl. Fig. 5b) eingesetzt werden, um entsprechende Steuersignale auf einen jeweils vorbestimmten digitalen Signaleingangsanschluss eines dort mit 120" gekennzeichneten Signalanschlussblocks zur temporären Aktivierung und/oder Deaktivierung der Aufzeichnungsfunktionalität aufzuschalten.

Als weitere ergänzende oder alternative Möglichkeit skizziert Fig. 5a noch eine Ausführungsform, bei der z.B. durch das Herstellen einer elektrischen Verbinden, z.B. durch Setzen einer Drahtbrücke, zwischen zwei Signalanschlüssen, des mit 120' gekennzeichneten Signalanschlussblocks ein Signal zur temporären Aktivierung und/oder Deaktivierung der Aufzeichnungsfunktionalität auf ein vorbestimmten digitalen Signaleingangsanschluss aufschaltbar ist, insbesondere bei Setzen der Drahtbrücke zwischen einem 24V Spannungsausgang und diesem vorbestimmten digitalen Signaleingangsanschluss, z.B. dem digitalen Signaleingangsanschluss DI1. Je nachdem, ob eine elektrische Verbindung hergestellt oder unterbrochen ist, ist folglich die Aufzeichnungsfunktionalität aktiviert bzw. deaktiviert, oder auch umgekehrt.

Wie nachfolgend noch detaillierter aufgezeigt, können mittels vorbeschriebener Schaltflächen, zentralen Management-Tools, Steuerkomponenten und/oder auf einen vorbestimmten digitalen Signaleingangsanschluss der Netzwerkkomponente entsprechend aufschaltbare Signale auch weitere Funktionen realisiert werden. Insbesondere kann hiermit, z.B. auch über einen anderen vorbestimmten digitalen Signaleingangsanschluss, z.B. Signaleingangsanschluss DI2, ergänzend oder alternativ auch eine Sperreinrichtung zum temporären Sperren des Zugriffs auf die jeweils aktuell aktivierten Datenverkehr-Regeln aufgebaut sein, d.h. der Zugriff auf die jeweils aktuell aktivierten Datenverkehr-Regeln kann temporär freigegeben und/oder gesperrt werden. Alternativ oder ergänzend kann auch als weitere Funktion das Aktivieren einer Zeitschaltfunktion, insbesondere bei Aktivierung der Aufzeichnungsfunktionalität, z.B. über Signaleingangsanschluss DI3, und/oder auch das Deaktivieren bzw. Ändern einer solchen aktivierten Zeitschaltfunktion realisiert werden. Eine oder mehrere, wie vorstehend beschriebene Zeitschaltfunktion(en) ist bzw. sind bei Fig. 5b durch einen von der erfindungsgemäßen Vorrichtung, insbesondere von der Netzwerkkomponente 100 beherbergten und entsprechend geeignet gekoppelten Aufzeichnungsfunktionalität gekoppelten Zeitmesser bzw. Zeitgeber 27 symbolisiert.

Insbesondere bei Nutzung eines vorbestimmten digitalen Signaleingangsanschlusses der Netzwerkkomponente 100 zum Aufschalten eines Signals, um eine oder mehrere vorstehend aufgezeigter Funktion zu realisieren, kann dies folglich auch von einem Nutzer ausgeführt werden, der keine besonderen Zugriffsrechte, wie z.B. Passwort, User-Rolle, etc., auf die Netzwerkkomponente hat. Die Vergabe von Rechten, Rollen und Passwörtern kann für die Realisierung solcher Funktionen somit grundsätzlich minimiert oder eingespart werden. Auch ohne spezielle Zugriffsrechte wäre jeder Nutzer, insbesondere Mitarbeiter, vor Ort in der Lage, z.B. eine Aufzeichnung bei Bedarf zu starten oder bei Bedarf auch zu stoppen
Bietet die Netzwerkkomponente gemäß der Erfindung eine ein Web-Based Management als Konfigurations-Option, sind in der Konfigurations-Oberfläche zweckmäßig d entsprechende Schaltflächen integriert, die die eine und/oder andere vorstehend aufgezeigte Funktion starten oder auch stoppen bzw. aktivieren oder deaktivieren.

Es sei erwähnt, dass zur Realisierung identischer Funktionen wie zuvor beschrieben, auch ein Netzwerkprotokoll, z.B. SNMP (Simple Network Management Protocol), entsprechende Objekte in einer Verwaltungsinformationsbasis, z.B. einer sogenannten MIB (Management Information Base) oder ein Script, z.B. CGI (Common Gateway Interface), das einen Standard für den Datenaustausch zwischen einem Webserver und dritter Software definiert, genutzt werden kann.

Bei Fig. 5b ist ferner eine mit der Aufzeichnungsfunktionalität gekoppelte Anzeige 26 von der erfindungsgemäßen Vorrichtung, insbesondere der Netzwerkkomponente 100, zum Anzeigen des Zustandes einer aktivierten Aufzeichnungsfunktionalität umfasst. Eine solche Anzeige kann je nach Ausbildung optisch und/oder akustisch Anzeigen, ob die Aufzeichnungsfunktionalität aktiviert ist oder auch nicht.

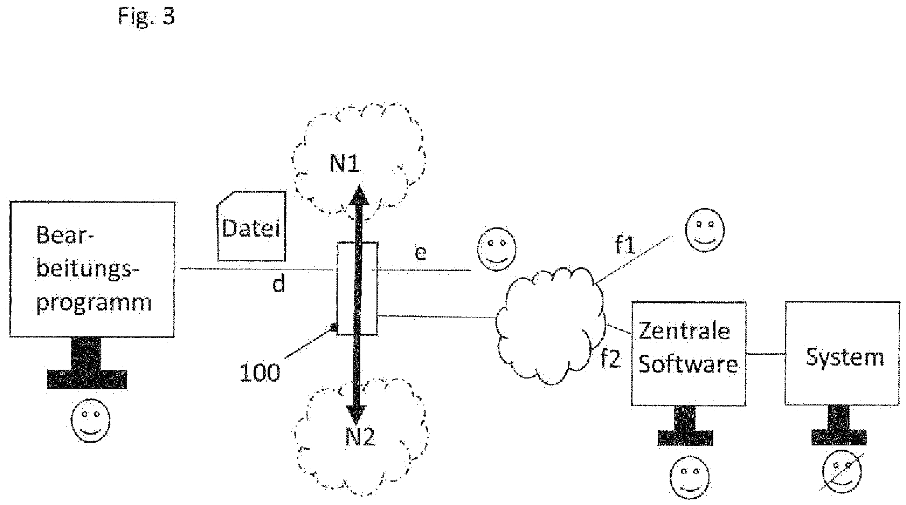

Nach Abschluss der Aufzeichnung der Kommunikationsbeziehung, d.h. bei dann deaktivierter Aufzeichnungsfunktionalität und somit freigegebener Bearbeitung der aufgezeichneten Kommunikationsbeziehungen kann der Datensatz mit den aufgezeichneten Kommunikationsbeziehungen zweckmäßig lokal oder auch aus der Ferne geprüft und bei Bedarf bearbeitet werden, wie auch der Fig. 3 zu entnehmen, welche in stark schematisierter Darstellung eine Netzwerkkomponente gemäß der Erfindung mit verschiedenen Ausführungsbeispielen zum Anpassen und nachfolgenden Aktivieren der Datenverkehr-Regeln zeigt. Beispielsweise kann der Datensatz lokal über eine entsprechende Schnittstelle in ein Bearbeitungsprogramm eines Rechners geladen und dort bearbeitet werden. Liegt der Datensatz z.B. in Form einer Liste vor, kann beispielsweise ein Tabellenbearbeitungsprogramm zur Bearbeitung und also zur Anpassung des Datensatzes und der entsprechenden Datenverkehr-Regeln eingesetzt werden. Nach Bearbeitung kann die bearbeitete Datei dann wieder zum Aktualisieren der in der Netzkomponente vorgehaltenen Datenverkehr-Regeln überspielt werden, wie bei Fig. 3 durch den mit d gekennzeichneten Pfeil angedeutet.

Die Übernahme der angepassten Datenverkehr-Regeln und nachfolgende Aktivierung, um dann darauf basierend Datenverkehr zwischen den Netzen passieren zu lassen oder das Passieren von Datenverkehr durch die Netzwerkkomponente zu blockieren kann dann Anwendungs- bzw. Netzkomponenten-spezifisch erfolgen, z.B. mittels eines hierfür an der Netzkomponente eingerichteten Betätigungsschalters oder auch Herstellen einer elektrischen Verbinden, z.B. durch Setzen einer Drahtbrücke mittels Herstellen einer elektrischen Verbindung zwischen zwei vorbestimmten Signalanschlüssen, wie oben beschrieben.

Alternativ oder ergänzend kann die Anpassung und anschließende Übernahme des angepassten Datensatzes auch mittels einem vorbeschriebenen Web-Based-Management der Netzwerkkomponente lokal erfolgen, bei Fig. 3 durch den mit e gekennzeichneten Pfeil angedeutet.

Alternativ oder ergänzend kann die Anpassung und anschließende Übernahme des angepassten Datensatzes auch mittels einem vorbeschriebenen Web-Based-Management aus der Ferne z.B. auch durch einen Nutzer über einen WEB-Browser erfolgen, bei Fig. 3 mit dem mit f1 gekennzeichneten Pfeil angedeutet. Alternativ oder ergänzend kann die Anpassung und anschließende Übernahme des angepassten Datensatzes auch aus der Ferne mittels einer zentralen Software durch den Nutzer oder automatisiert mittels eines entsprechend eingerichteten System ohne einen Nutzer erfolgen, wobei die beiden Beispiele bei bei Fig. 3 mit dem mit f2 gekennzeichneten Pfeil angedeutet sind.

Mit anderen Worten muss das spätere Anpassen, insbesondere auch Finalisieren und/oder Optimieren nicht vor Ort durch die Vorrichtung, insbesondere Netzwerkkomponente, selbst oder an der Vorrichtung, insbesondere Netzwerkkomponente durch einen Nutzer erfolgen. Die Überprüfung kann auch an einem anderen Standort, zu einem anderen Zeitpunkt von einem Dritten erfolgen.

Das bietet insbesondere auch den Vorteil für den Fall, wenn z.B. Ereignisse berücksichtigt werden müssen die nicht innerhalb der Aufzeichnungszeitraums stattgefunden haben, d.h. solange die Aufzeichnungsfunktionalität aktiviert war, die aber für die Verfügbarkeit des eines oder mehrerer Netzwerke zukünftig auch wichtig sind.

So kann es beispielsweise sein, dass während der Aufzeichnungsphase eine wichtige aber seltene Kommunikation, z.B. eine "Notaus-Meldung", nicht stattfindet und somit nicht aufgezeichnet wird. Diese Meldung darf zukünftig aber nicht durch, wie vorstehend beschrieben, insbesondere mit Router- und/oder Firewallfunktion eingerichtete oder insgesamt als Router- und/oder Firewallgerät ausgebildete Netzwerkkomponente, blockiert werden und müsste daher nachträglich als ein Kommunikationsereignisse aus der Vergangenheit mit zur angepassten Datenverkehr-Regel wieder hinzugefügt werden.:
Auch kann es beispielsweise sein, dass der OT-Verantwortliche bereits weiß von absehbaren Veränderung in der Zukunft, z.B., dass ein oder mehrere Netzwerke, zwischen die die Netzwerkkomponente geschaltet ist, vor Ort bald umgebaut oder erweitert wird. Diese Kommunikationsverbindungen können somit noch nicht aufgezeichnet werden, sollen aber bereits berücksichtigt werden. Auch hier müssten die notwendigen Kommunikationsbeziehungen bzw. entsprechenden Datenverkehr-Regeln entsprechend ergänzt werden, damit es zukünftig keine Probleme gibt.

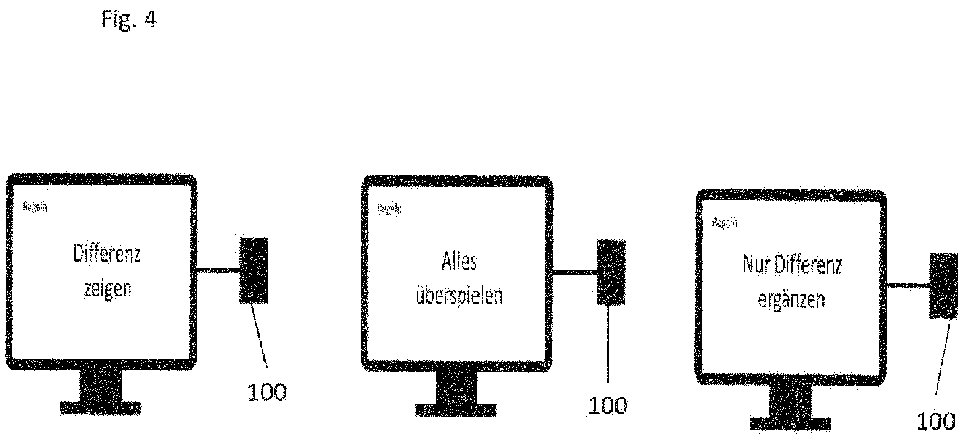

Auch beim Überspielen eines aktualisierten Datensatzes in die Netzkomponente können Anwendungs- und/oder Netzwerkkomponentenspezifisch verschiedene Möglichkeiten zur Anwendung kommen. Beispielsweise kann, wie bei Fig. 4 stark schematisiert dargestellt, eine Differenz der Datenverkehr-Regeln angezeigt werden, die angepassten und Datenverkehr-Regeln zur Aktualisierung vollständig überspielen, um die vorherigen Datenverkehr-Regeln komplett zu ersetzen oder nur die Differenz der Datenverkehr-Regeln zur Aktualisierung überspielen, um die vorherigen Datenverkehr-Regeln entsprechend zu ergänzen.

Da die Datenverkehr-Regeln bzw. allg. die Regelsätze somit nicht automatisch verändert basierend auf den aufgezeichneten Kommunikationsbeziehungen verändert bzw. aktualisiert werden, erhöht dies zusätzlich die Sicherheit. Außerdem kann z.B. ein 4-Augen-Prinzip bei der Aktualisierung der Datenverkehr-Regeln angewendet werden, um z.B. Nutzer zu schulen. So kann z.B. ein Nutzer A den Datensatz extern konfigurieren, und Nutzer B konfiguriert einen entsprechenden Datensatz am Gerät. Anschließend wird der externe Dateisatz zusätzlich eingespielt. Sind die Datensätze unterschiedlich, gibt es einen Hinweis. Dann kann die Ursache geklärt werden, insbesondere ob Nutzer A oder B etwas nicht bedacht hat.

Wird die Aufzeichnungsfunktionalität aktiviert, wird zweckmäßig ferner eine eingerichtete Firewallfunktion der Netzwerkkomponente für diesen Zeitraum grundsätzlich deaktiviert, insbesondere wenn der gesamte eingehende und ausgehende Datenverkehr zu Aufzeichnung durchgelassen werden soll um die Kommunikationsbeziehungen zu erfassen und entsprechende "Allow-Regeln" anzupassen. Hierbei gibt es auch Anwendungen, in denen die Aufzeichnung mehrere Stunden evtl. sogar Tage dauern kann, um alle Kommunikationsbeziehungen zu erfassen. Sollte ein Nutzer z.B. vergessen die Aufzeichnungsfunktionalität nach einem beabsichtigten "Aufzeichnungs-Zeitfenster" zu deaktivieren, würde die Netzwerkkomponente also dauerhaft im "Aufzeichnungsmodus" verbleiben und alle Datenpakete würden ohne Firewallfunktion passieren können, was ein Sicherheitsrisiko darstellt. Eine wie vorstehend beschriebene Zeitschaltfunktion kann hierbei beispielsweise ein solches Sicherheits-Risiko reduzieren. Läuft der Zeitmesser nach einer voreingestellten Zeitspanne ab, wird z.B. die Aufzeichnungsfunktionalität automatisch deaktiviert und der Datenverkehr wieder eingeschränkt. Zweckmäßig kann eine solche voreingestellte Zeitspanne, z.B. 2 Stunden, aber auch vom Nutzer entsprechend angepasst werden.

Aktiviert z.B. ein Nutzer, insbesondere Mitarbeiter, aus der Ferne, insbesondere mit entsprechenden IT-Zugriffsrechten, die Aufzeichnungsfunktionalität der Netzwerkkomponente und deaktiviert hierbei gleichzeitig die eingerichtete Firewallfunktion, beispielsweise für 12 Stunden (Nachtdurchlauf), wird dann jedoch spontan krank, so schaltet nach Ablauf der 12 Stunden dennoch die aktivierte Zeitschaltfunktion die Aufzeichnungsfunktionalität automatisch ab und die Netzwerkkomponente kann zusätzlich auch wieder in den Ausgangszustand vor Aktivierung der Aufzeichnungsfunktionalität versetzt werden. Die Sicherheitslücke wurde automatisch geschlossen.

Ferner liegt es im Rahmen der Erfindung, dass über ein an einem vorbestimmten digitalen Signaleingangsanschluss der Netzwerkkomponente aufgeschaltetes Signal eine solche Zeitschaltfunktion sofort auf Null gesetzt werden kann. Eine aktivierte Aufzeichnungsfunktionalität kann somit schlagartig deaktiviert.

Hat z.B. ein Nutzer, insbesondere Mitarbeiter, aus der Ferne die Aufzeichnungsfunktionalität für 5 Stunden aktiviert, um den Datenverkehr aufzuzeichnen und ein anderer Nutzer, insbesondere Mitarbeiter, sieht vor Ort, dass die Vorrichtung oder eine über die Netzwerkkomponente kommunizierende Komponente, insbesondere Maschine, sich untypisch verhält, so kann Nutzer vor Ort z.B. einen "Notaus-Schalter" drücken und die Netzwerkkomponente schaltet sofort wieder in den sicheren Ursprungszustand, d.h. die Aufzeichnungsfunktionalität wird deaktiviert und eine Firewallfunktion wieder aktiviert. Dies zweckmäßiger Weise auch dann, wenn die eingestellte Zeitspanne (z.B.5 Stunden) noch nicht abgelaufen ist. Der Nutzer vor Ort kann somit im "Notfall" die Zeitschaltfunktion sofort auf Null setzen und Netzwerkkomponente wieder in den Ausgangszustand vor Aktivierung der Aufzeichnungsfunktionalität versetzen.

Ist, wie oben beschrieben, eine mit der Netzwerkkomponente eingerichtete Firewallfunktion deaktiviert solange die Aufzeichnungsfunktionalität aktiv ist, kann das Aktivieren/Deaktivieren der Aufzeichnungsfunktionalität auch häufig über das Web Based Management erfolgen. Der Zugriff auf das Geräte Web Based Management kann wie beschrieben auch aus der Ferne, z.B. aus einem anderen Gebäude erfolgen. Das Aktivieren der Aufzeichnungsfunktionalität aus der Ferne stellt somit ein Sicherheitsrisiko dar. Damit ein Nutzer vor Ort erkennen kann, dass die Firewallfunktion temporär deaktiviert ist, kann zweckmäßig ein Schaltausgang an der Netzwerkkomponente entsprechend gesetzt werden. Über diesen Schaltausgang kann dann z.B. eine Anzeige, z.B. Signalleuchte an einer Maschine geschaltet werden, um das Personal vor Ort über die Deaktivierung der Firewall zu informieren, z.B. durch Leuchten oder Blinken einer Lampe.

Greift demnach z.B. ein Nutzer, insbesondere Mitarbeiter, insbesondere mit entsprechenden IT-Rechten, aus der Ferne auf die Firewallfunktion zu, indem er die Aufzeichnungsfunktionalität aktiviert und hierdurch die Firewallfunktion deaktiviert die Firewall, vertippt sich dieser gegebenenfalls jedoch bei der Vorgabe der Zeitspanne für eine integrierte Zeitschaltfunktion und gibt z.B. 55 Stunden anstelle von 5 Stunden ein. Ein Nutzer, insbesondere Mitarbeiter, vor Ort ist nun auch ohne Zugriffsrechte auf die Firewallfunktion in der Lage, mit Hilfe der Anzeige, nach 6 oder 7 Stunden einen IT-Fachmann darüber zu informieren, dass die Aufzeichnungsfunktionalität noch immer aktiviert und die Firewallfunktion deaktiviert ist. Es kann somit eine Überwachung nach dem 4-Augen-Prinzip zwischen dem IT-Fachmann und dem Nutzer vor Ort realisiert werden.

Wie oben beschrieben, kann z.B. aus der Ferne, insbesondere über ein Web Based Management die Aufzeichnungsfunktionalität aktiviert oder deaktiviert werden. Wird dieses nicht mit einem Nutzer vor Ort abgestimmt, kann das ein Sicherheitsrisiko darstellen. Ein Verändern einer Firewallfunktion im Allgemeinen sowie das Aktivieren der Aufzeichnungsfunktionalität im speziellen kann somit ein Sicherheitsrisiko darstellen.

Die Netzwerkkomponente gemäß der Erfindung, im hier beschriebenen Beispiel insbesondere eine industrielle Firewall, besitzt daher zweckmäßig mindestens einen vorbestimmten digitalen Signaleingangsanschluss zum Aufschalten eines Signals, z.B. durch das Setzten einer Drahtbrücke, um den Zugriff auf die jeweils aktuell aktivierten Datenverkehr-Regeln zu sperren und bevorzugt jegliche Veränderung der Einstellung der Firewallfunktion grundsätzlich verhindert. In einer einfachen Form hat die Netzwerkkomponente hierzu nur einen Spannungseingang. In einer Ausbaustufe hat die Netzwerkkomponente einen Spannungsausgang und einen Spannungseingang. Das hat den Vorteil, dass der Kunde nur eine kurze Drahtbrücke oder einen Verbindungstecker zwischen 24V und dem Spannungseingang setzen muss und die Firewall-Blockierung kann schnell aufgehoben werden, durch das Ziehen der Drahtbrücke bzw. des Steckers.

Beispielsweise besitzt ein Nutzer, insbesondere Mitarbeiter, entsprechende Zugriffsrechte, um aus der Ferne auf das Web-Based-Management zugreifen zu können. Er will schnell aus der Ferne über das Web-Based-Management die Firewallfunktion, insbesondere die Datenverkehr-Regeln der Netzwerkkomponente gemäß Erfindung verändern, um z.B. etwas auszuprobieren. Jegliche Veränderung der Einstellung der Firewallfunktion ist jedoch durch Setzen einer wie vorstehend beschriebenen Drahtbrücke grundsätzlich verhindert. Der entfernte Nutzer kann andere Bereiche im WBM (Web-Based-Management ansehen und verändern, die Firewallfunktion oder Datenverkehr-Regeln aber nicht. Um diese ändern zu können, muss ein Nutzer erst vor Ort die elektrische Verbindung zwischen 24V und dem Spannungseingang, beispielsweise also die gesetzte Drahtbrücke wieder entfernen. Erst jetzt kann der entfernte Nutzer, der normalerweise auch die Rechte besitzt sowie die entsprechende Rolle innehat, solche Änderungen durchzuführen, die Firewallfunktion, insbesondere auch die Datenverkehr-Regeln der Netzwerkkomponente gemäß Erfindung im Web Based Management verändern. Es wurde somit eine "harte" Verriegelung nach dem 4-Augen-Prinzip zwischen dem IT-Fachmann mit entsprechenden Zugriffsrechten und einem Nutzer vor Ort realisiert.

Wie zuvor mit Bezug auf Fig. 3 beschrieben, kann auch vorgesehen sein, dass aus der Ferne mittels eines entsprechend eingerichteten Systems ohne einen Nutzer Konfigurationen vorgenommen werden können, beispielsweise eine eingerichte Firewallfunktion der Netzwerkkomponente voll automatisch über eine Machine-to-Machine-Schnittstelle konfigurieren (Restful-API-Schnittstelle). Daher kann es auch hier wichtig sein, dass am Ende auch ein Nutzer vor Ort noch die Möglichkeit hat, schnell einzugreifen.

Unter Würdigung vorstehender Beschreibung kann somit zusammenfassend festgehalten werden, dass erfindungsgemäß eine Aufzeichnung der Kommunikationsbeziehungen nicht während einer Lernphase.

Vielmehr wird im Gegensatz hierzu durch Aktivieren der Aufzeichnungsfunktionalität der Datenverkehr lediglich aufgezeichnet und durch Deaktivieren der Aufzeichnungsfunktionalität die Aufzeichnung beendet. Erst anschließend wird aus den Aufzeichnungsdaten eine Zusammenfassung der Kommunikationsbeziehungen erstellt. Dabei werden nur doppelte Einträge nicht aufgezeichnet aber kein spezieller Lernalgorithmus eingesetzt. Über ein webbasiertes Interface können die Kommunikationsbeziehungen z.B. dargestellt werden, um diese zu sichten und zu bearbeiten. Die ermittelten Kommunikationsbeziehungen können zweckmäßig in einem geschützten Speicherbereich abgelegt werden und/oder die Anwendung der Kommunikationsregeln erfolgt bevorzugt in einer Steuereinheit, wie z.B. einer CPU oder einem Switch-Baustein, und ist in zweckmäßiger Weise vom webbasiertem Interface unabhängig. Die aktuellen Datenverkehr-Regeln werden somit nicht automatisch in einer Lernphase ersetzt. Das erhöht die Sicherheit.

Erst wenn die Aufzeichnung beendet ist und der Nutzer die Kommunikationsbeziehungen überprüft und für korrekt hält, werden die Regeln in die Netzwerkkomponente übertragen. Auch dies erhöht die Sicherheit. Es wird somit kein Optimierungsalgorithmus in einer Lernphase genutzt, der die Regeln auf Plausibilität überprüft.

Beim Erfassen der Kommunikationsbeziehungen werden zwar Doppeleinträge, z.B. in einer hierbei erstellten internen Tabelle, zweckmäßig vermieden. Es erfolgt aber keine Optimierung, wie z.B., dass aus drei Einzelregeln eine übergreifende Regel oder ähnliches gebildet wird.

## Patentansprüche

1. Vorrichtung, umfassend
- eine Netzwerkkomponente, die zwischen wenigstens zwei Kommunikations-, Anlagen- und/oder Rechnernetzen geschaltet sowie geeignet und ausgebildet ist, Datenverkehr in Abhängigkeit von anpassbaren und entsprechend aktivierten Datenverkehr-Regeln zwischen den Netzen passieren zu lassen oder ein Passieren von Datenverkehr durch die Netzwerkkomponente zu blockieren, wobei die Netzwerkkomponente eine Aufzeichnungsfunktionalität zum Aufzeichnen der beim Passieren des Datenverkehrs vorliegenden Kommunikationsbeziehungen besitzt,
**dadurch gekennzeichnet, dass**
eine mit der Aufzeichnungsfunktionalität zusammenwirkende Aktivierungs-/Deaktivierungseinrichtung umfasst ist, zum temporären Aktivieren und/oder Deaktivieren der Aufzeichnungsfunktionalität, und die Netzwerkkomponente eingerichtet ist, nur bei deaktivierter Aufzeichnungsfunktionalität die aufgezeichneten Kommunikationsbeziehungen zur Anpassung und nachfolgender Aktivierung der Datenverkehr-Regeln freizugeben.

2. Vorrichtung nach Anspruch 1, wobei für die Aktivierungs-/Deaktivierungseinrichtung
- eine START/STOP-Schaltfläche, insbesondere in einem Web-Based-Management der Netzwerkkomponente umfasst ist,
- ein vorbestimmter digitaler Signaleingangsanschluss der Netzwerkkomponente zum Aufschalten eines Signals nutzbar ist, und/oder
- ein externes, insbesondere zentrales Management-Tool umfasst ist.

3. Vorrichtung nach Anspruch 1 oder 2, wobei die Netzwerkkomponente ausgebildet und eingerichtet ist, bei aktivierter Kommunikationsbeziehung-Aufzeichnungsfunktionalität bereits aufgezeichnete Kommunikationsbeziehungen bei wiederholtem Auftreten nicht ein weiteres Mal aufzuzeichnen.

4. Vorrichtung nach einem der Ansprüche 1 bis 3, wobei die Aufzeichnungsfunktionalität mit einer Zeitschaltfunktion gekoppelt ist und/oder die Vorrichtung eine mit der Aufzeichnungsfunktionalität gekoppelte optische und/oder akustische Anzeige zum Anzeigen des Zustandes einer aktivierten Aufzeichnungsfunktionalität umfasst und/oder die Sperreinrichtung zum temporären Sperren des Zugriffs auf die jeweils aktuell aktivierten Datenverkehr-Regeln.

5. Vorrichtung nach einem der Ansprüche 1 bis 4, wobei bei aktivierter Aufzeichnungsfunktionalität eine eingerichtete Firewallfunktion der Netzwerkkomponente für diesen Zeitraum grundsätzlich deaktiviert ist.

6. Verfahren zum Betreiben einer Netzwerkkomponente, die zwischen wenigstens zwei Kommunikations-, Anlagen- und/oder Rechnernetzen geschaltet sowie geeignet und ausgebildet ist, Datenverkehr in Abhängigkeit von anpassbaren und entsprechend aktivierten Datenverkehr-Regeln zwischen den Netzen passieren zu lassen oder ein Passieren von Datenverkehr durch die Netzwerkkomponente zu blockieren, wobei die Netzwerkkomponente eine Kommunikationsbeziehung-Aufzeichnungsfunktionalität zum Aufzeichnen der beim Passieren des Datenverkehrs vorliegenden Kommunikationsbeziehungen besitzt,
**dadurch gekennzeichnet, dass**
die Aufzeichnungsfunktionalität zum Aufzeichnen von Kommunikationsbeziehungen temporär aktiviert und/oder deaktiviert werden kann und nur bei deaktivierter Kommunikationsbeziehung-Aufzeichnungsfunktionalität die Bearbeitung der aufgezeichneten Kommunikationsbeziehungen zur Anpassung und nachfolgender Aktivierung der Datenverkehr-Regeln freigegeben wird.

7. Verfahren nach vorstehendem Anspruch, wobei die Kommunikationsbeziehung-Aufzeichnungsfunktionalität mittels
- einer START/STOP -Schaltfläche, insbesondere in einem Web-Based-Management der Netzwerkkomponente,
- durch Aufschalten eines Signals auf einen vorbestimmten digitalen Signaleingangsanschluss der Netzwerkkomponente, und/oder
- mittels eines externen, insbesondere zentralen Management-Tools aktiviert und/oder deaktiviert wird.

8. Verfahren nach einem der zwei vorstehenden Ansprüche, wobei Kommunikationsbeziehungen während einer temporären Aktivierung lediglich nur einmal aufgezeichnet werden und bereits aufgezeichnete Kommunikationsbeziehungen bei wiederholtem Auftreten nicht ein weiteres Mal aufgezeichnet werden.

9. Verfahren nach einem der drei vorstehenden Ansprüche, wobei zusammen mit der Aktivierung der Aufzeichnungsfunktionalität eine Zeitschaltfunktion aktiviert wird und/oder der Zustand einer aktivierten Aufzeichnungsfunktionalität mittels einer optischen und/oder akustischen Anzeige angezeigt wird und/oder der Zugriff auf die jeweils aktuell aktivierten Datenverkehr-Regeln temporär freigegeben und/oder gesperrt werden kann.

10. Verfahren nach einem der vier vorstehenden Ansprüche, wobei bei Aktivierung der Aufzeichnungsfunktionalität eine eingerichtete Firewallfunktion der Netzwerkkomponente für diesen Zeitraum grundsätzlich deaktiviert wird.

## Claims

1. Device comprising
- a network component which is connected between at least two communication, system and/or computer networks and is suitable and designed for allowing data traffic to pass between the networks or to block data traffic from passing through the network component depending on adaptable and appropriately activated data traffic rules, the network component has a recording functionality for recording the communication relationships present when the data traffic passes,
**characterised in that**
an activation/deactivation device which interacts with the recording functionality is included for temporarily activating and/or deactivating the recording functionality, and the network component is set up to release the recorded communication relationships for adaptation and subsequent activation of the data traffic rules only, when the recording functionality is deactivated.

2. Device according to claim 1, wherein for the activation//deactivation device
- a START/STOP button, in particular in a web-based management of the network component is included,
- a predetermined digital signal input connection of the network component can be used to switch on a signal, and/or
- an external, in particular central management tool is included.

3. Device according to claim 1 or 2, wherein the network component is designed and configured so that, when the communication relationship recording functionality is activated, communication relationships that have already been recorded are not recorded a second time if they occur repeatedly.

4. Device according to any one of claims 1 to 3, wherein the recording functionality is coupled to a timer function and/or the device has an optical and/or acoustic display coupled to the recording functionality for displaying the state of an activated recording functionality and/or the blocking device for temporarily blocking access to the respectively currently activated data traffic rules.

5. Device according to one of claims 1 to 4, wherein, when the recording functionality is activated, an established firewall function of the network component is principally deactivated for this period.

6. Method of operating a network component which is connected between to at least two communication, system and/or computer networks and is suitable and designed to allow data traffic to pass between the networks or to block data traffic from passing through the network component depending on adaptable and appropriately activated data traffic rules, wherein the network component has a communication relationship recording functionality to record the communication relationships present when the traffic passes,
**characterised in that**
the recording functionality for recording communication relationships can be temporarily activated and/or deactivated and the processing of the recorded communication relationships is released for the adjustment and subsequent activation of the data traffic rules only, when the communication relationship is deactivated.

7. Method according to the preceding claim, wherein the communication relationship recording functionality is activated and/or deactivated by means of
- a START/STOP button, in particular in a web-based management of the network component,
- by connecting a signal to a predetermined digital signal input terminal of the network component, and/or by means of
- an external, in particular central management tools.

8. Method according to one of the two preceding claims, wherein communication relationships are only recorded once during a temporary activation and communication relationships that have already been recorded are not recorded a second time if they occur repeatedly.

9. Method according to one of the three preceding claims, wherein, together with the activation of the recording functionality, a timer function is activated and/or the state of an activated recording functionality is indicated by means of a visual and/or acoustic display and/or access to the respective currently activated data traffic rules can be temporarily released and/or blocked.

10. Method according to one of the four preceding claims, wherein, when the recording functionality is activated, an established firewall function of the network component is principally deactivated for this period.

## Revendications

1. Dispositif, comprenant
- un composant de réseau, lequel est connecté entre au moins deux réseaux de communication, d'installations et/ou de calculateurs et lequel est approprié et conçu pour laisser passer un trafic de données, en fonction de règles de trafic de données adaptables et activées de manière correspondante, entre les réseaux ou pour bloquer un passage du trafic de données à travers le composant de réseau, dans lequel le composant de réseau comprend une fonctionnalité d'enregistrement pour enregistrer les relations de communication présentes lors du passage du trafic de données,
**caractérisé en ce que**
un agencement d'activation/désactivation coopérant avec la fonctionnalité d'enregistrement est compris pour activer et/ou désactiver temporairement la fonctionnalité d'enregistrement, et le composant de réseau est conçu pour libérer les relations de communication enregistrées uniquement lorsque la fonctionnalité d'enregistrement est désactivée pour l'adaptation et l'activation ultérieure des règles de trafic de données.

2. Dispositif selon la revendication 1, dans lequel pour l'agencement d' activation/désactivation
- un bouton MARCHE/ARRÊT est compris, en particulier dans une gestion basée sur le Web du composant de réseau,
- une borne d'entrée de signal numérique prédéterminée du composant de réseau peut être utilisée pour appliquer un signal, et/ou
- un outil de gestion externe, en particulier central, est compris.

3. Dispositif selon la revendication 1 ou 2, dans lequel le composant de réseau est conçu et réalisé, lorsque la fonctionnalité d'enregistrement des relations de communication est activée, pour ne pas enregistrer à nouveau des relations de communication déjà enregistrées si elles se produisent de manière répétée.

4. Dispositif selon l'une quelconque des revendications 1 à 3, dans lequel la fonctionnalité d'enregistrement est couplée à une fonction de minuterie et/ou le dispositif comprend un affichage optique et/ou acoustique couplé à la fonctionnalité d'enregistrement pour afficher l'état d'une fonctionnalité d'enregistrement activée et/ou un agencement de verrouillage pour verrouiller temporairement l'accès aux règles de trafic de données respectivement actuellement activées.

5. Dispositif selon l'une quelconque des revendications 1 à 4, dans lequel, lors de l'activation de la fonctionnalité d'enregistrement, une fonction de pare-feu configurée du composant de réseau est en principe désactivée pendant cette période.

6. Procédé d'exploitation d'un composant de réseau, lequel est connecté entre au moins deux réseaux de communication, d'installations et/ou de calculateurs et lequel est approprié et conçu pour laisser passer un trafic de données, en fonction de règles de trafic de données adaptables et activées de manière correspondante, entre les réseaux ou pour bloquer un passage du trafic de données à travers le composant de réseau, dans lequel le composant de réseau comprend une fonctionnalité d'enregistrement des relations de communication pour enregistrer les relations de communication présentes lors du passage du trafic de données,
**caractérisé en ce que**
la fonctionnalité d'enregistrement pour enregistrer les relations de communication peut être activée et/ou désactivée temporairement et ce n'est que lorsque la fonctionnalité d'enregistrement des relations de communication est désactivée que le traitement des relations de communication enregistrées est activé pour l'adaptation et l'activation ultérieure des règles de trafic de données.

7. Procédé selon la revendication précédente, dans lequel la fonctionnalité d'enregistrement des relations de communication est activée et/ou désactivée au moyen
- d'un bouton MARCHE/ARRÊT, en particulier dans une gestion basée sur le Web du composant de réseau,
- par application d'un signal à une borne d'entrée de signal numérique prédéterminé du composant de réseau, et/ou
- au moyen d'un outil de gestion externe, en particulier central.

8. Procédé selon l'une quelconque des deux revendications précédentes, dans lequel les relations de communication ne sont enregistrées qu'une seule fois lors d'une activation temporaire et les relations de communication déjà enregistrées ne sont pas enregistrées à nouveau si elles se produisent de manière répétée.

9. Procédé selon l'une quelconque des trois revendications précédentes, dans lequel, conjointement à l'activation de la fonctionnalité d'enregistrement, une fonction de minuterie est activée et/ou l'état d'une fonctionnalité d'enregistrement activée est affiché au moyen d'un affichage optique et/ou acoustique et/ou l'accès aux règles de trafic de données respectivement actuellement activées peut être temporairement libéré et/ou verrouillé.

10. Procédé selon l'une quelconque des quatre revendications précédentes, dans lequel, lors de l'activation de la fonctionnalité d'enregistrement, une fonction de pare-feu configurée du composant de réseau est en principe désactivée pendant cette période.
